# EUROPÄISCHE PATENTSCHRIFT

(11) **EP 0 579 255 B1**
(45) Veröffentlichungstag und Bekanntmachung des Hinweises auf die Patenterteilung: **31.01.1996**
(21) Anmeldenummer: 93111473.0
(22) Anmeldetag: 16.07.1993
(51) Int. Cl.: B06B 1/04

(54) **Ultraschall-Prüfkopf**
Ultrasonic test head
Tête de mesure ultrasonore

(30) Priorität: 16.07.1992 DE 4223470
(43) Veröffentlichungstag der Anmeldung: 19.01.1994
(73) Patentinhaber: FRAUNHOFER-GESELLSCHAFT ZUR FÖRDERUNG DER ANGEWANDTEN FORSCHUNG E.V., D-80636 München (DE)
(72) Erfinder: Salzburger, Hans-Jürgen, W-668 Neunkirchen (DE)
(74) Vertreter: Münich, Wilhelm, Dr.

(56) Entgegenhaltungen:
- EP-A- 0 440 317
- DE-A- 3 637 366
- US-A- 4 395 913
- PATENT ABSTRACTS OF JAPAN vol. 8, no. 1 (P-246) 6. Januar 1984 & JP-A-58 166 256 (HIROSHI SHIMIZU) 1. Oktober 1983
- PATENT ABSTRACTS OF JAPAN vol. 10, no. 93 (P-445) (2150) 10. April 1986 & JP-A-60 227 163 (HIROSHI SHIMIZU) 12. November 1985
- PATENT ABSTRACTS OF JAPAN vol. 8, no. 1 (P-246) 6. Januar 1984 & JP-A-58 166 256
- PATENT ABSTRACTS OF JAPAN vol. 10, no. 93 (P-445) (2150) 10. April 1986 & JP-A-60 227 163

## Beschreibung

Die Erfindung bezieht sich einen Ultraschall-Prüfkopf mit einer Einrichtung für die koppelmittelfreie Erzeugung von Ultraschallwellen in einem Werkstück gemaß dem Oberbegriff des Patentanspruchs 1.

Derartige Prüfköpfe ermöglichen die Senkrechteinschallung von linear polarisierten Transversalwellen und die Schrägeinschallung von horizontal und vertikal polarisierten Transversalwellen (SH-, SV-Wellen).

Technisches Anwendungsgebiet gattungsgemäßer Prüfköpfe sind die Fehlerprüfung, die Dickenmessung und andere auf Ultraschall basierende Verfahren mit linear polarisierten Transversalwellen, wie akustische Doppelbrechung und Laufzeitverfahren zur Bestimmung von Eigenspannungen oder elastischen Anisotropien über Schallgeschwindigkeitsmessungen.

Die aus dem Stand der Technik, beispielsweise aus der EP-A-0 440 317 bekannten koppelmittel-freien elektromagnetischen Ultraschall-Prüfköpfe arbeiten mit der Überlagerung eines magnetischen Hochfrequenzfeldes innerhalb der elektromagnetischen Skintiefe eines leitfähigen Materials mit einem statischen oder niederfrequenten Magnetfeld. Das magnetische Hochfrequenzfeld wird von einer Luftspule erzeugt, die möglichst nahe an der Oberfläche des leitfähigen Materials angeordnet sein muß. Deren elektromagnetisches Feld erzeugt innerhalb der Skintiefe ein Wirbelstromfeld, das von dem äußeren magnetischen Gleich- oder niederfrequenten Wechselfeld überlagert wird. Auch die Empfangsspule ist bei dem aus der EP-A-0 440 317 bekannten Stand der Technik eine Luftspule.

Für die Wandlung linear polarisierter Transversalwellen mit senkrechtem Einfall wird eine linienförmige Drahtwicklung unter dem Mittelschenkel eines E-förmigen Magnetjoches dicht an der Materialoberfläche angebracht. Zur Erzeugung der schräg eingeschallten horizontal polarisierten Transversalwellen (SH-Wellen) wird in der prinzipiellen Ausführung unter einer Anordnung von Permanentmagneten mit alternierender Polarität eine Hochfrequenzspule über die von den Permanentmagnetstreifen vorgegebenen Wandlerfläche geführt. Die Spurwellenlänge eines solchen Wandlers ist durch den Abstand gleichnamiger Permanentmagnete gegeben.

In der DE-C-36 37 366 ist eine Ausführungsform einer Hochfrequenz-Spulenanordnung beschrieben, die sich in einem horiziontal oder rechtwinklig zur Werkstückoberfläche ausgerichteten statischen oder niederfrequenten Magnetfeld befindet. Diese Hochfrequenz-Spulenanordnung besteht aus mehreren Hochfrequenzspulen, die auf einem magnetisch gut leitenden Spulenträger hoher Sättigungsinduktion mit wenigstens zwei parallel verlaufenden Leisten mit für benachbarte Hochfrequenzspulen jeweils alternierendem Wicklungssinn aufgewickelt sind.

Mit dieser Ausführungsform wird mit Hilfe eines Hochfrequenz-Übertragers ein räumlich periodisches Magnetfeld erzeugt. Sie wird primär nur genutzt zur Wandlung der in der Einfallsebene polarisierten Transversalwellen (SV-Wellen) und der Rayleighschen Oberflächenwellen.

Die konventionelle Ausführung der universell einsetzbaren Hochfrequenzspulen als sogenannte Luftspulen hat den wesentlichen Nachteil, daß diese sehr nahe an der Oberfläche des zu prüfenden Werkstückes angeordnet sein müssen; der sogenannte Abhebeeffekt reduziert den Abstand auf Werte < 1 mm.

Es ist Aufgabe der Erfindung, einen Ultraschall-Prüfkopf gemäß dem Oberbegriff des Anspruchs 1 derart weiterzubilden, daß er bei vereinfachtem Grundaufbau linear polarisierte Transversal- und Longitudinalwellen sowie horizontal und vertikal polarisierte Transversalwellen bzw. Rayleighwellen erzeugen kann.

Eine erfindungsgemäße Lösung dieser Aufgabe ist im Patentanspruch 1 angegeben. Weiterbildungen der Erfindung sind in den Unteransprüchen gekennzeichnet.

Erfindungsgemäß wird ein gattungsgemäßer Ultraschall-Prüfkopf derart weitergebildet, daß die Sendespulenanordnung und die Empfangsspulenanordnung auf einem teilgeschlossenen Magnetkern angeordnet sind, dessen Öffnung dem zu untersuchenden Werkstück zugekehrt ist, und daß in der Öffnung des Magnetkerns die Vormagnetisierungsanordnung angeordnet ist. In jedem Falle befinden sich auf dem Magnetkern mindestens zwei Hochfrequenzspulen, die als Sende- und Empfangsspulen dienen.

Damit ist es möglich, die für die elektrodynamische Ultraschall-Wandlung benötigten hochfrequenten Wirbelströme im Frequenzbereich zwischen einigen 100 kHz und 2-4 MHz und ein statisches oder niederfrequentes (Frequenzen bis zu maximal einigen 100 Hz) magnetisches H- bzw. B-Feld zur Vormagnetisierung bei großem Wirkungsgrad der Anordnung zu erzeugen. Die Felder können abhängig vom anzuregenden Wellentyp und dem Werkstoff (ferromagnetisch oder nicht ferromagnetisch) senkrecht oder parallel zur Werkstückoberfläche gerichtet sein.

Bei ferromagnetischen Werkstücken können beide Vormagnetisierungen eingesetzt werden, um Transversalwellen schräg in das Material abstrahlen zu können. Es sind jedoch wesentliche Unterschiede in den Wandlungsmechanismen zu berücksichtigen: Bei der senkrechten Vormagnetisierung erfolgt die Schallwandlung primär über Lorentzkräfte, bei der horizontalen dagegen über Magnetostriktion.

Gemäß Anspruch 2 kann der Magnetkern die Form eines Torus-Sektors haben. Der als Ringsektor ausgebildete Magnetkern, der nach Anspruch 3 bevorzugt aus einem kommerziellen Ringbandübertrager gefertigt sein kann, ist mit seiner offenen Seite dem zu prüfenden Werkstück zugewandt und sitzt incl. der Spulen als Kompaktanordnung auf dem Werkstück auf oder weist einen geringen Abstand zu dem Werkstück auf. Magnetsisierungseinrichtungen erzeugen die zur elektromagnetischen Ultraschallwandlung notwendige Vormagnetisierung und im Zusammenwirken mit der Hochfrequenz-Spulenanordnung die für die jeweilige Meßaufgabe gewünschte Wellencharakteristik.

Die auf dem Ringsektor aufsitzenden Spulen dienen zum Senden und Empfangen der Ultraschallwelle. Die Sendespule wird von einem Stromimpuls- oder -burst gespeist; dieser Stromimpuls erzeugt ein magnetisches Wechselfeld B_{Ω} im Übertrager, das über einen kleinen Luftspalt in das Werkstück übertragen wird. Mit dieser Anordnung erzeugt man ein entlang der offenen Seite bzw. der Öffnung des Ringsektors räumlich homogenes horizontales magnetisches Wechselfeld B innerhalb der Skintiefe des Werkstückes.

Gemäß Anspruch 4 wird zur Erzeugung eines senkrecht zur Werkstückoberfläche gerichteten homogenen Magnetfeldes im offenen Teil des Ringsektors ein die Öffnung weitgehend ausfüllendes zylinderförmiges weichmagnetisches Material eingebracht, das auf der zur Werkstoffoberfläche zugewandten Seite abgeflacht sein kann (Anspruch 5).

Auf den senkrecht zur Zylinderachse orientierten Oberflächen dieses abgeflachten Teils ist je ein zylindrischer Permanentmagnet angeordnet.

Die beiden zylindrischen Permanentmagnete sind in Richtung der Zylinderachse magnetisiert; dies führt dazu, daß die magnetischen Polaritäten auf den beiden senkrecht zur Zylinderachse orientierten Oberflächen des weichmagnetischen abgeflachten Teils identisch sind. Dadurch wird bewirkt, daß die senkrecht in Richtung der Zylinderachse des weichmagnetischen Teiles eintretenden magnetischen Feldlinien in der vertikalen Mittelebene in Richtung der Mantelfläche abgebogen werden und senkrecht zu der Mantelfläche austreten und damit auch senkrecht in das zu prüfende Werkstück eintreten.

Mit einer derartigen Konfiguration wird eine linear polarisierte Transversal-Welle angeregt, die in Richtung von B_{Ω} polarisiert ist und sich senkrecht zur Werkstoffoberfläche ausbreitet. Der Empfangsmechanismus beruht auf dem umgekehrten Effekt; die zum Prüfkopf zurückkommende Welle moduliert das Magnetfeld B_{Ω}, so daß in der Empfangsspule der Hochfrequenz-Spulenanordnung eine Spannung induziert wird.

Diese Konfiguration kann nach Anspruch 6 so erweitert werden, daß sie als Kombinationsprüfkopf zum simultanen Senden und Empfangen von linear polarisierten Transversalwellen und von Longitudinalwellen einsetzbar ist. Hierzu wird im Zentrum des zylindrischen weichmagnetischen Teils eine zur Oberfläche des zu prüfenden Werkstoffes hin offene Bohrung eingebracht, die einen kommerziellen piezoelektrischen Prüfkopf für Longitudinalwellen aufnimmt. Das zur Anregung der Longitudinalwellen notwendige Koppelmittel stört in keiner Weise die elektromagnetische Wandlung der linear polarisierten Transversalwelle.

Für die Erzeugung horizontal polarisierter Transversalwellen (SH-Wellen) wird die zur entsprechenden elektromagnetischen Ultraschallwandlung notwendige Vormagnetisierung bevorzugt mit einer Vormagnetisierungsanordnung gemäß Anspruch 7 realisiert. Mit dieser Vormagnetisierungsanordnung wird ein inhomogenes senkrechtes Magnetfeld erzeugt.

In den offenen Teil bzw. die Öffnung z.B. des Ringbandübertragers wird eine Anordnung liegender rechteckiger Permanentmagnetstreifen mit alternierender Polarität eingebracht. Die einzelnen Permanentmagnetstreifen sind dabei in Richtung ihrer Höhe so magnetisiert, daß die langen (liegenden) Seiten in Richtung des dynamischen B-Feldes weisen.

Eine solche SH-Welle kann sich sowohl schräg als auch streifend zur Oberfläche des Werkstückes ausbreiten. Ihre Spur-Wellenlänge ist durch den Abstand gleichnamiger Permanentmagnetstreifen gegeben; die Frequenz wird bestimmt durch die Mittelfrequenz des Sendestrom-Impulses, der durch die Sendespule geschickt wird (Anspruch 9). Die Detektion der Ultraschall-Wellen beruht wiederum auf dem reziproken Effekt.

Im Anspruch 8 ist eine modifizierte Vormagnetisierungsanordnung zur Erzeugung vertikal polarisierter Transversalwellen (SV-Wellen) bzw. Rayleigh-Wellen gekennzeichnet. Hier erfolgte die Anordnung der Permanentmagnetstreifen im offenen Teil des Ringbandübertragers in der Weise, daß die Schmalseiten der Permanentmagnetstreifen in Richtung des dynamischen B-Feldes weisen. Spur-Wellenlänge und Frequenz dieser Welle werden ebenfalls durch den Abstand gleichnamiger Permanentmagnetstreifen und die Mittenfrequenz des Sendestrom-Impulses bestimmt (Anspruch 9).

Mit Anspruch 10 ist gekennzeichnet, daß die zylindrischen Permanentmagnete bzw. die rechteckigen Permanentmagnetstreifen aus NdFeB bestehen können.

Die Hochfrequenz-Spulenanordnung besteht nach Anspruch 11 vorzugsweise aus zwei Hochfrequenzspulen, die mehrere Windungen aufweisen, d.h. jeweils einer Sende- und Empfangsspule, die auf dem Ringsektor des Magnetkerns, also beispielsweise des Ringbandübertragers aufsitzen.

Auf den Ringbandübertrager können auch mehrere Spulen zum Senden bzw. zum Empfangen aufgebracht sein, die zur Impedanzanpassung an den Sendegenerator bzw. an den Eingang eines Verstärkers beispielsweise in Reihe oder parallel geschaltet sind (Anspruch 12).

Mit der Anwendung der Erfindung sind insbesondere folgende wesentliche Vorteile verbunden:
Die erzeugten dynamischen Magnetfelder bzw. Wirbelstromfelder in der Oberfläche des Werkstückes unterliegen aufgrund der Geometrie des Hochfrequenz-Magnetkreises einem weitaus geringeren Abhebeeffekt als bei einer Luftspule. Damit kann der Übertrager/Ringsektor mit einer Abhebung von über 1 mm selbst bei Frequenzen von mehreren MHz betrieben werden.

Die Hochfrequenzspule kann wirksam mechanisch geschützt werden, da sie beispielsweise bis zu mehreren Zentimetern von der Oberfläche zurücksitzt.

Der Hochfrequenzteil ist einfach herzustellen, da kein zusätzlicher Spulenträger notwendig ist. Die Hochfrequenzspulen werden auf den Ringbandübertrager als Spulenträger aufgewickelt.

Die einfache Herstellung betrifft darüberhinaus den gesamten Prüfkopf. Magnetkern und Vormagnetisierungsanordnung können beispielsweise in einem Gehäuse vergossen werden.

Das trifft in gleicher Weise zu auf den Kombinationsprüfkopf für die Senkrechteinschallung von Transversal- und Longitudinalwellen, der bei der zerstörungsfreien Ermittlung von Eigenspannungen oder Vorspannungen beispielsweise an Schrauben für die Trennung der vom Wellentyp abhängigen Gefüge- und Spannungseinflüsse auf die Ultraschallgeschwindigkeit vorteilhaft eingesetzt werden kann.

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: einen Sektor eines Ringbandübertragers mit Hochfrequenzspulen,
- Fig. 2: einen Längsschnitt durch eine Vormagnetisierungseinrichtung zur Erzeugnung eines homogenen senkrechten Magnetfeldes,
- Fig. 3: eine Prüfkopfausführung zur Senkrechteinschallung von linear polarisierten Transversalwellen,
- Fig. 4: eine Anordnung der Permanentmagnetstreifen zur Erzeugnung eines inhomogenen senkrechten Magnetfeldes,
- Fig. 5: einen Winkel-Prüfkopf für SH-Wellen,
- Fig. 6: eine Anordnung der Permanentmagnete zur Erzeugung von SV-Wellen und
- Fig. 7: eine Anordnung zur Erzeugung von SV- und Rayleigh-Wellen.

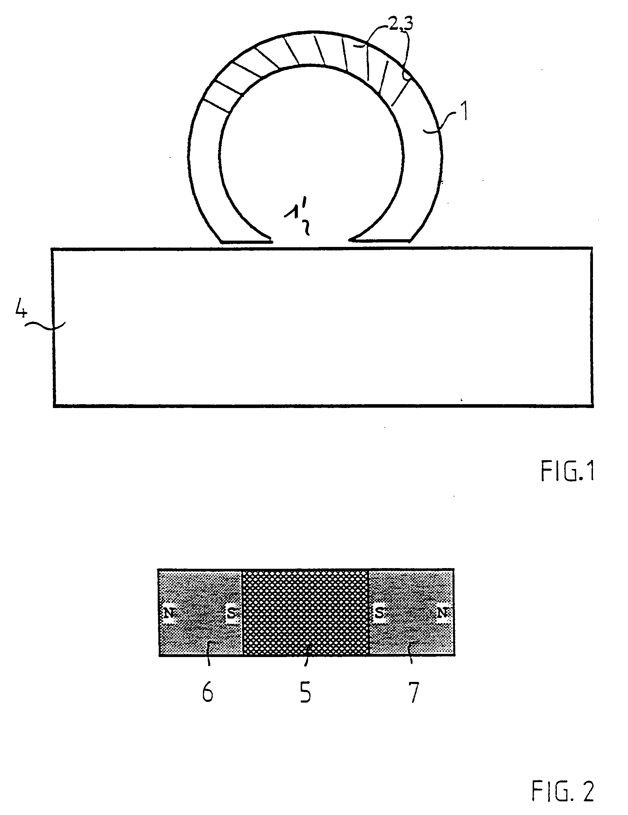

Fig. 1 zeigt einen aus einem kommerziellen Ringbandübertrager gefertigen Ringsektor 1. Auf diesem Ringsektor, der als Spulenträger dient, sind die Hochfrequenzspulen aufgewickelt; bei dem gezeigten Ausführungsbeispiel werden zwei aus mehreren Windungen bestehende Hochfrequenzspulen 2 und 3 verwendet.

Der Ringsektor wird mit der offenen Seite auf das zu prüfende Werkstück 4 aufgesetzt. Die beiden Spulen 2 und 3 dienen zum Senden und Empfangen der Ultraschallwelle. Die Sendespule 2 wird von einem Stromimpuls-oder -burst gespeist; dieser Stromimpuls erzeugt ein magnetisches Wechselfeld B_{Ω} im Übertrager 1, das über einen kleinen Luftspalt in das Werkstück 4 übertragen wird.

Mit dieser Anordnung erzeugt man ein entlang der offenen Seite des Ringbandübertragers räumlich homogenes horizontales magnetisches Wechselfeld B_{Ω} innerhalb der Skintiefe des Werkstückes 4.

Ein Teil des von den Hochfrequenzspulen erzeugten hochfrequenten Magnetfeldes, dessen Frequenzbereich innerhalb des Ultraschallfrequenzbereiches liegt, dringt in das Werkstück ein und induziert Wirbelströme, die zusammen mit der zur elektromagnetischen Ultraschall-Wandlung notwendigen Vormagnetisierung aufgrund von Lorentzkräften oder Magnetostriktionen Ultraschallwellen erzeugen.

Fig. 2 zeigt eine Vormagnetisierungsanordnung zur Erzeugung eines homogenen senkrechten Magnetfeldes im Längsschnitt. Im offenen Teil des Ringsektors wird ein die Ausnehmung ausfüllendes zylinderförmiges weichmagnetisches Material 5, das auf der zur Werkstoffoberfläche zugewandten Seite abgeflacht ist, eingesetzt. Auf den senkrecht zur Zylinderachse orientierten Oberflächen des Teils werden je ein ebenfalls zylindrischer Permanentmagnet aus NdFeB 6 und 7, die in Richtung der Zylinderachse magnetisiert sind, so angeordnet, daß die magnetischen Polaritäten auf den beiden senkrecht zur Zylinderachse orientierten Oberflächen des weichmagnetischen Materials 5 identisch sind.

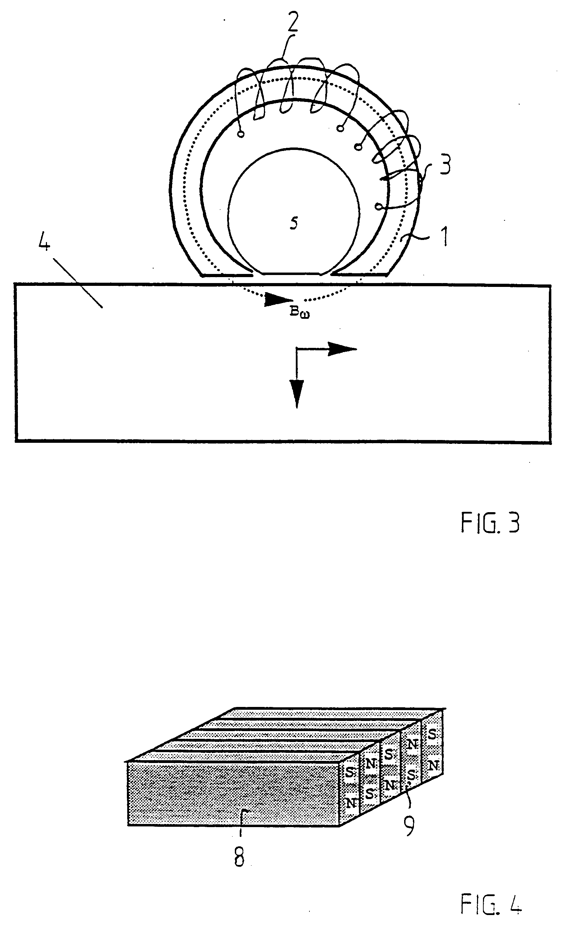

Mit der in Fig. 3 wiedergegebenen Konfiguration wird eine linear polarisierte Transversal-Welle angeregt, die in Richtung von B_{Ω} polarisiert ist und sich senkrecht zur Werkstoffoberfläche ausbreitet. Im Sendefall werden die Hochfrequenzspulen 2,3 vom Hochfrequenz-Generator mit Hochfrequenz-Stromimpulsen der Frequenz der Ultraschallwelle gespeist. Im Empfangsfall sind die Hochfrequenzspulen an eine nicht dargestellte Signalverstärkungs- und verarbeitungselektronik angeschlossen.

Der Ringsektor 1 als Spulenträger besteht aus magnetisch gut und elektrisch schlecht leitendem Material; er sollte vorzugsweise eine hohe Sättigungsinduktivität und eine geringe Längsmagnetostriktion aufweisen.

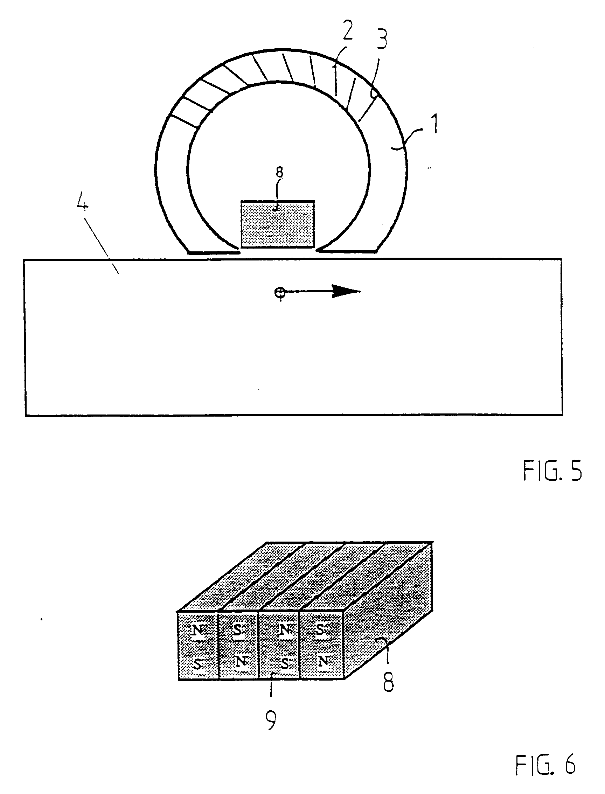

Mit einer in dem offenen Teil des Ringbandübertragers befindlichen Anordnung (8) rechteckiger Permanentmagnetstreifen (9) alternierender Polarität aus beispielsweise NdFeB, s. Fig. 4 kann ein inhomogenes senkrechtes Magnetfeld erzeugt werden. Die liegend angeordneten Permanentmagnetstreifen (9) sind dabei in Richtung ihrer Höhe so aufmagnetisiert, daß die langen Seiten in Richtung des dynamischen B-Feldes liegen. Auf diese Weise wird, wie in Fig. 5 veranschaulicht eine horizontal polarisierte Transversalwelle (SH-Welle) gewandelt, die in der Zeichenebene schwingt und sich senkrecht dazu ausbreitet.

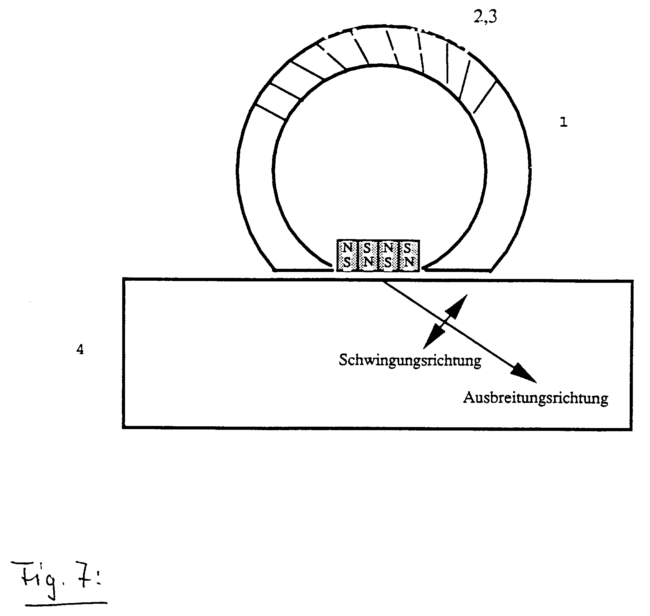

Dreht man gemäß Fig. 6 die Anordnung der Permanentmagnete 8 so um 90°, daß die Schmalseiten der Permanentmagnetstreifen (9) in Richtung von B_{Ω} liegen (Fig. 7), so wird eine vertikal polarisierte Transversalwelle (SV-Welle) erzeugt, die in der Zeichenebene (gleich Einfallsebene) schwingt und sich schräg zur Oberfläche des Werkstückes 4 oder sich als Rayleigh-Welle parallel zur Oberfläche (in Richtung von B_{Ω}) ausbreitet.

Die Spur-Wellenlänge bzw. Frequenz der Wellen können durch die Geometrie der Vormagnetisierungsanordnung und die Mittenfrequenz der Sendestrom-Impulse/-bursts eingestellt werden.

Der erfindungsgemäß Ultraschall-Prüfkopf kann durch Austausch der Vormagnetisierungseinrichtung leicht von einem Anwendungsfall auf einen anderen umgerüstet werden.

## Patentansprüche

1. Ultraschall-Prüfkopf mit
- einer Einrichtung für die koppelmittelfreie Erzeugung von Ultraschallwellen in einem Werkstück (4), die eine Sendespulenanordnung (2), an die zur Erzeugung eines magnetischen HF-Feldes eine HF-Spannung angelegt ist, und eine Vormagnetisierungsanordnung zur Erzeugung eines quasistatischen Magnetfeldes aufweist, das dem magnetischen HF-Feld im Werkstück (4) überlagert wird, und
- einer Empfangsspulenanordnung (3), die die Spannung erfaßt, die durch die durch die Ultraschallwellen hervorgerufenen Änderungen des Magnetfeldes induziert wird, und die mit einer Auswerteeinheit verbunden ist,
dadurch **gekennzeichnet**, daß die Sendespulenanordnung (2) und die Empfangsspulenanordnung (3) auf einem teil-geschlossenen Magnetkern (1) angeordnet sind, dessen Öffnung (1') dem zu untersuchenden Werkstück (4) zugekehrt ist, und
daß in der Öffnung (1') des Magnetkerns (1) die Vormagnetisierungsanordnung angeordnet ist.

2. Ultraschall-Prüfkopf nach Anspruch 1,
dadurch **gekennzeichnet**, daß der Magnetkern (1) die Form eines Torus-Sektors hat.

3. Ultraschall-Prüfkopf nach Anspruch 2,
dadurch **gekennzeichnet**, daß der Magnetkern (1) aus einem kommerziell erhältlichen Ringbandübertragers gefertigt ist.

4. Ultraschall-Prüfkopf nach einem der Ansprüche 1 bis 3,
dadurch **gekennzeichnet**, daß zur Anregung linear polarisierter Transversalwellen die Vormagnetisierungsanordnung ein im wesentlichen zylinderförmiges weichmagnetisches Material (5) aufweist, dessen Zylinderachse senkrecht zu der Ebene des Kerns (1) angeordnet ist, und auf dessen Stirnflächen jeweils ein ebenfalls im wesentlichen zylinderförmiger Permanentmagnet (6,7) angeordnet ist, der in Richtung der Zylinderachse magnetisiert ist, und daß gleichnamige Pole (S) der Permanentmagnete (6,7) einander zugekehrt sind.

5. Ultraschall-Prüfkopf nach Anspruch 4,
dadurch **gekennzeichnet**, daß das weichmagnetische Material (5) und die beidseits dieses Materials angeordneten Permanentmagneten (6,7) an ihrer dem Werkstück (4) zugewandten Seite abgeflacht sind.

6. Ultraschall-Prüfkopf nach Anspruch 4 und 5,
dadurch **gekennzeichnet**, daß zum simultanen Senden und Empfangen linear polarisierter Transversalwellen und Longitudinalwellen im Zentrum des zylindrischen weichmagnetischen Teils (5) eine zur Oberfläche des zu prüfenden Werkstückes (4) hin offene Bohrung eingebracht ist, in der ein piezoelektrischer Prüfkopf angeordnet ist, der Longitudinalwellen erzeugt und empfängt.

7. Ultraschall-Prüfkopf nach einem der Ansprüche 1 bis 3,
dadurch **gekennzeichnet**, daß zur Erzeugung horizontal polarisierter Transversalwellen (SH-Welle) die Vormagnetisierungsanordnung eine Mehrzahl (8) rechteckiger Permanentmagnetstreifen (9) aufweist, deren Längsachse in der Ebene des Magnetkerns (1) angeordnet ist, und auf deren Stirnseiten die Magnetpole (N,S) alternierend vorgesehen sind.

8. Ultraschall-Prüfkopf nach einem der Ansprüche 1 bis 3,
dadurch **gekennzeichnet**, daß zur Erzeugung vertikal polarisierter Transversalwellen (SV-Wellen) bzw. Rayleigh-Wellen die Vormagnetisierungsanordnung eine Mehrzahl (8) rechteckiger Permanentmagnetstreifen (9) aufweist, deren Längsachse senkrecht zur Ebene des Magnetkerns (1) angeordnet ist, und auf deren Stirnseiten die Magnetpole (N,S) alternierend vorgesehen sind.

9. Ultraschall-Prüfkopf nach Anspruch 7 oder 8,
dadurch **gekennzeichnet**, daß die Spur-Wellenlänge der Ultraschallwellen durch den Abstand gleichnamiger Permanentmagnetstreifen (9) und die Frequenz durch die Mittenfrequenz des Sendestrom-Impulses bestimmt sind.

10. Ultraschall-Prüfkopf nach einem der Ansprüche 4 bis 9,
dadurch **gekennzeichnet**, daß die zylindrischen Permanentmagnete (6,7) bzw. die rechteckigen Permanentmagnetstreifen (9) aus NdFeB gefertigt sind.

11. Ultraschall-Prüfkopf nach einem der Ansprüche 1 bis 10,
dadurch **gekennzeichnet**, daß zwei aus vorzugsweise mehreren Windungen bestehende Hochfrequenzspulen (2,3) als Sende- und Empfangsspule auf dem Magnetkern (1) angeordnet sind.

12. Ultraschall-Prüfkopf nach einem der Ansprüche 1 bis 11,
dadurch **gekennzeichnet**, daß auf dem Magnetkern mehrere Spulen zum Senden bzw. zum Empfangen aufgebracht sind, die zur Impedanzanpassung an den Sendegenerator bzw. an den Eingang eines Verstärkers beispielsweise in Reihe oder parallel geschaltet sind.

## Claims

1. Ultrasonic testing head comprising
- a means for coupler-free generation of ultrasonic waves in a workpiece (4), which includes a transmit coil system (2) which a high-frequency voltage is applied to so as to generate a magnetic high-frequency field, and a biassing system for generating a quasi-static magnetic field which is superimposed onto said magnetic high-frequency field in said workpiece (4), and
- a receive coil system (3) which detects the voltage induced by the variations of the magnetic field which are provoked by the ultrasonic waves, and which is connected to an evaluator means,
**characterized** in that said transmit coil system (2) and said receive coil system (3) are disposed on a partially closed magnetic core (1) whose opening (1') faces the workpiece (4) to be analyzed, and
that said biassing means is disposed in said opening (1') of said magnetic core (1).

2. Ultrasonic testing head according to Claim 1,
**characterized** in that said magnetic core (1) has the shape of a toroidal sector.

3. Ultrasonic testing head according to Claim 2,
**characterized** in that said magnetic core (1) is made of a commercially available toroidal band transformer.

4. Ultrasonic testing head according to any of Claims 1 to 3,
**characterized** in that said biassing system includes a substantially cylindrical soft magnetic material (5) whose cylinder axis is disposed so as to be normal to the plane of said core, for exciting linearly polarized transverse waves, which presents faces on which an equally substantially cylindrical permanent magnet each (6, 7) is disposed which is magnetized in the direction of said cylinder axis, and in that similar poles (S) of said permanent magnets (6, 7) are facing each other.

5. Ultrasonic testing head according to Claim 4,
**characterized** in that said soft magnetic material (5) and said permanent magnets (6, 7), which are disposed on either side of said material, are flatted on their side facing said workpiece (4).

6. Ultrasonic testing head according to Claims 4 and 5,
**characterized** in that for simultaneous transmission and receiving of linearly polarized transverse waves and longitudinal waves a bore is provided in the centre of said cylindrical soft magnetic portion (5), which is open towards the surface of said workpiece (4) to be tested, in which bore a piezo-electric testing head is disposed which generates and receives the longitudinal waves.

7. Ultrasonic testing head according to any of Claims 1 to 3,
**characterized** in that said biassing means includes a plurality (8) of rectangular permanent magnetic strips (9) for generating horizontally polarized transverse waves (SH wave), with the longitudinal axes of said strips extending in the plane of said magnetic core (1) and with the magnetic poles (N, S) being provided in alternation on the face sides of the strips.

8. Ultrasonic testing head according to any of Claims 1 to 3,
**characterized** in that said biassing means includes a plurality (8) of rectangular permanent magnetic strips (9) for generating vertically polarized transverse waves (SV waves), with the longitudinal axes of said strips extending in direction normal to the plane of said magnetic core (1) and with the magnetic poles (N, S) being disposed in alternation on the face sides of the strips.

9. Ultrasonic testing head according to Claim 7 or 8,
**characterized** in that the trace wavelength of the ultrasonic waves is determined by the distance between similar permanent magnetic strips (9) and the frequency is determined by the centre frequency of the transmit current pulse.

10. Ultrasonic testing head according to any of Claims 4 to 9,
**characterized** in that said cylindrical permanent magnets (6, 7) or said rectangular permanent magnetic strips (9), respectively, are made of NdFeB.

11. Ultrasonic testing head according to any of Claims 1 to 10,
**characterized** in that two high-frequency coils (2, 3), which preferably consist of several windings, are disposed as transmit and receive coils on said magnetic core (1).

12. Ultrasonic testing head according to any of Claims 1 to 11,
**characterized** in that several coils are mounted for transmitting or receiving operation, respectively, on said magnetic core, which coils are connected to the transmit generator or the input of an amplifier, respectively, for impedance matching, e.g. either in a series or in a parallel circuit.

## Revendications

1. Probe pour essais aux ultra-sons comprenant
- un moyen à engendrer, sans élément de couplage, des ondes ultrasonores dans une pièce à travailler (4), lequel moyen comprend un système de bobines émettrices (2), auquel une tension à haute fréquence est appliquée afin d'engendrer un un champ magnétique à haute fréquence, et un système polarisateur à engendrer un champ magnétique quasi-statique, qui est superposé sur ledit champ magnétique à haute fréquence dans ladite pièce à travailler (4), et
- un système de bobines réceptrices (3), qui détecte la tension induite par les variations dudit champ magnétique, qui sont provoquées par les ondes ultrasonores, et qui est relié à un moyen d'évaluation,
**caractérisée** en ce que ledit système de bobines émettrices (2) et ledit système de bobines réceptrices (3) sont disposés sur un noyau d'aimant (1) fermé en partie, dont l'ouverture (1') se trouve en face de la pièce à travailler (4) à analyser, et
en ce que le moyen polarisateur est disposé dans ladite ouverture (1') dudit noyau d'aimant (1).

2. Probe pour essais aux ultra-sons selon la revendication 1,
**caractérisée** en ce que ledit noyau d'aimant (1) présente la forme d'un secteur torique.

3. Probe pour essais aux ultra-sons selon la revendication 2,
**caractérisée** en ce que ledit noyau d'aimant (1) est produit d'un transformateur à tore enroulé commercial.

4. Probe pour essais aux ultra-sons selon une quelconque des revendications 1 à 3,
**caractérisée** en ce que ledit système polarisateur comprend un matériau magnétique doux (5) essentiellement cylindrique, dont l'axe du cylindre est disposé de façon orthogonale au plan dudit noyau, afin d'exciter des ondes transversales à polarisation linéaire, et qui a des faces sur lesquelles est disposé un aimant permanent respectif (6, 7), qui est également essentiellement cylindrique et qui est magnétisé en sens dudit axe de cylindre, et en ce que des pôles de même polarité (S) desdits aimants permanents (6, 7) se trouvent en face l'un à l'autre.

5. Probe pour essais aux ultra-sons selon la revendication 4,
**caractérisée** en ce que ledit matériau magnétique doux (5) et lesdits aimants permanents (6, 7), qui sont montés des deux côtés dudit matériau, sont aplatis sur leur côté en face de ladite pièce à travailler (4).

6. Probe pour essais aux ultra-sons selon les revendications 4 et 5,
**caractérisée** en ce qu'au centre de ladite partie magnétique douce cylindrique (5) est prévu un alésage, qui est ouvert vers la surface de ladite pièce à travailler (4) à analyser, afin de permettre l'émission et réception simultanées des ondes transversales et longitudinales à polarisation linéaire, dans lequel alésage est disposé une probe piézoélectrique qui engendre et reçoit lesdites ondes longitudinales.

7. Probe pour essais aux ultra-sons selon une quelconque des revendications 1 à 3,
**caractérisée** en ce que ledit moyen polarisateur comprend une pluralité (8) des pistes magnétiques permanents rectangulaires (9) afin d'engendrer des ondes transversales à polarisation horizontale (onde SH), aux axes longitudinaux desdits pistes s'étendant dans le plan dudit noyau magnétique (1) et aux pôles magnétiques (N, S) étant prévus à tour de rôle sur les côtés de face desdits pistes.

8. Probe pour essais aux ultra-sons selon une quelconque des revendications 1 à 3,
**caractérisée** en ce que ledit moyen polarisateur comprend une pluralité (8) des pistes magnétiques permanents rectangulaires (9) afin d'engendrer des ondes transversales à polarisation verticale (ondes SV), aux axes longitudinaux desdits pistes s'étendant en sens orthogonal au plan dudit noyau magnétique (1), et aux pôles magnétiques (N, S) étant disposés à tour de rôle sur les côtés de face desdits pistes.

9. Probe pour essais aux ultra-sons selon la revendication 7 or 8,
**caractérisée** en ce que la longueur d'onde de voie desdites ondes ultrasonores est déterminée par la distance entre des pistes magnétiques permanents de même polarité (9), et que la fréquence est déterminée par la fréquence centrale de l'impulsion de courant d'émission.

10. Probe pour essais aux ultra-sons selon une quelconque des revendications 4 à 9,
**caractérisée** en ce que lesdits aimants permanents cylindriques (6, 7) ou respectivement lesdits pistes magnétiques permanents rectangulaires (9) sont produits de NdFeB.

11. Probe pour essais aux ultra-sons selon une quelconque des revendications 1 à 10,
**caractérisée** en ce que deux bobines haute fréquence (2, 3), qui sont constituées de préférence, de plusieurs spires, sont disposées comme des bobines émettrices et réceptrices sur ledit noyau magnétique (1).

12. Probe pour essais aux ultra-sons selon une quelconque des revendications 1 à 11,
**caractérisée** en ce que plusieurs bobines sont montées, pour une fonction émettrice ou respectivement réceptrice, sur ledit noyau magnétique, lesquelles bobines sont reliées au générateur d'émission ou respectivement à l'entrée d'un amplificateur afin d'achever une adaptation d'impédance, soit mises en série, soit mises en parallèle.
